# FASCICULE DE BREVET EUROPEEN

(11) **EP 2 123 900 B1**
(45) Date de publication et mention de la délivrance du brevet: **10.07.2013**
(21) Numéro de dépôt: 09159147.9
(22) Date de dépôt: 30.04.2009
(51) Int. Cl.: F02N 11/04, F02N 11/08

(54) **Système micro-hybride à plusieurs alterno-démarreurs**
Mikro-Hybridsystem mit mehreren Wechselanlassern
Micro-hybrid system with several alternators-starters

(30) Priorité: 23.05.2008 FR 0853370
(43) Date de publication de la demande: 25.11.2009
(73) Titulaire: VALEO EQUIPEMENTS ELECTRIQUES MOTEUR, 94046 Créteil Cedex (FR)
(72) Inventeur: Armiroli, Paul, 94440, Marolles en Brie (FR); Matt, Jean-Claude, 21000, Dijon (FR); Boudjemai, Farouk, 91460, Marcoussis (FR); Masfaraud, Julien, 75010, Paris (FR)

(56) Documents cités:
- WO-A1-02/46607
- FR-A1- 2 874 658
- FR-A1- 2 902 705
- US-A- 5 095 864
- ANONYME: "La technologie Stop-Start Valeo expérimentée par la RATP sur un Microbus de la Traverse Bièvre-Montsouris : lorsque le bus s?arrête, le moteur aussi." VALEO COMMUNIQUÉS, [Online] 8 mai 2007 (2007-05-08), XP002513721 Extrait de l'Internet: URL:http://www.valeo.com/fr/communiques/de tails.html?id=16> [extrait le 2009-02-05]

## Description

### DOMAINE TECHNIQUE DE L'INVENTION.

La présente invention concerne un système micro-hydride à plusieurs alterno-démarreurs pour moteur thermique de véhicule de grosse cylindrée.

### ARRIERE PLAN TECHNOLOGIQUE DE L'INVENTION.

Des considérations d'économie d'énergie et de réduction de la pollution, surtout en milieu urbain, conduisent les constructeurs de véhicules automobiles à équiper leurs modèles d'un système d'arrêt/relance automatique du moteur thermique, tel que le système connu sous le terme anglo-saxon de « Stop and Go ».

Ainsi que le rappelle la société VALEO EQUIPEMENTS ELECTRIQUES MOTEUR dans la demande de brevet FR2875549, les véhicules sont rendus aptes à fonctionner selon le mode « Stop and Go » grâce à une machine électrique réversible, ou alterno-démarreur, couplée au moteur thermique, alimentée par un onduleur en mode « démarreur ».

L'utilisation d'un alterno-démarreur dans un mode de fonctionnement « Stop and Go » consiste, sous certaines conditions, à provoquer l'arrêt complet du moteur thermique lorsque le véhicule est lui-même à l'arrêt, puis à redémarrer le moteur thermique à la suite, par exemple, d'une action du conducteur interprétée comme une demande de redémarrage.

Une situation typique de « Stop and Go » est celle de l'arrêt à un feu rouge. Lorsque le véhicule s'arrête au feu, le moteur thermique est automatiquement stoppé, puis, quand le feu devient vert, le moteur est redémarré au moyen de l'alterno-démarreur, comme suite à la détection par le système de l'enfoncement de la pédale d'embrayage par le conducteur, ou de toute autre action traduisant la volonté du conducteur de redémarrer son véhicule.

Un tel système d'arrêt/relance automatique du moteur thermique équipe à ce jour essentiellement des voitures particulières, mais on en comprend bien l'intérêt de généraliser son utilisation à d'autres types de véhicules en terme d'économie d'énergie et de préservation de l'environnement, compte tenu des conditions de circulation en ville.

Une source de pollution importante est constituée par les moteurs des véhicules utilitaires, notamment ceux des camions, des autobus et des autres véhicules de services ou de transport en commun.

Il est donc naturel d'envisager une installation d'un système de type « Stop and Go » sur ces catégories de véhicules afin de réduire leur consommation moyenne de carburant, ainsi que les émission polluantes.

Les moteurs thermiques qui équipent ces véhicules sont des moteurs de grosse cylindrée, diesel ou essence, qui demandent la mise en oeuvre d'alterno-démarreurs ayant des caractéristiques de couple et de puissance spécifiques, et différentes de celles des alterno-démarreurs montés sur les voitures particulières de petite cylindrée.

Toutefois, pour des raisons évidentes de réduction des coûts, la conception d'un alterno-démarreur dédié uniquement au démarrage de gros moteurs serait à éviter.

Dans le communiqué intitulé *"*La technologie Stop-Start Valeo expérimentée par la RATP sur un Microbus de la Traverse Bièvre-Montsouris : lorsque le bus s'arrête, le moteur aussi." daté du 18 mai 2007, Valéo décrit un système à alterno-démarreur pour moteur thermique dans un bus urbain (http://www.valeo.com/fr/communiques/details.html?id=16 ou XP002513721).

Le document US5095864 décrit le démarrage d'un moteur de grosse cylindrée à l'aide de deux démarreurs, et WO 02/46607 décrit le démarrage à froid d'un moteur de grosse cylindrée à l'aide d'un démarreur et d'un alterno-démarreur opérés simultanément.

### DESCRIPTION GENERALE DE L'INVENTION.

La présente invention vise à donc à résoudre de problème, et a précisément pour objet un système micro-hybride, connecté à un réseau électrique de bord, d'un premier moteur thermique d'un véhicule ayant une première cylindrée supérieure ou égale à une première valeur prédéterminée.

Ce système est remarquable en ce qu'il comprend un nombre supérieur ou égal à deux de dispositifs à alterno-démarreur identiques couplés mécaniquement au premier moteur thermique. Les caractéristiques de couple et de puissance de chacun de ces dispositifs à alterno-démarreur, sans être adaptées au premier moteur thermique, sont adaptées à un second moteur thermique ayant une seconde cylindrée inférieure ou égale à une seconde valeur prédéterminée égale à une fraction de la première valeur prédéterminée.

De préférence, le nombre de dispositifs à alterno-démarreur identiques est supérieur ou égal à l'inverse de cette fraction, les taux de compression des premier et second moteurs étant sensiblement identiques.

Selon l'invention, chacun des dispositifs à alterno-démarreur comprend avantageusement un alterno-démarreur relié à un convertisseur AC/DC réversible connecté au réseau électrique de bord.

Dans un mode de réalisation de l'invention, le réseau électrique de bord est connecté directement à une batterie de bord.

Dans un autre mode de réalisation de l'invention, ce réseau électrique de bord comprend préférentiellement au moins une ultra-capacité, et/ou au moins un convertisseur DC/DC et/ou au moins une batterie de bord.

Dans cet autre mode de réalisation, un convertisseur DC/DC est avantageusement relié à l'ultra-capacité et à une batterie de bord.

On tire également bénéfice du fait que le système micro-hybride, selon cet autre mode de réalisation, comprend une fonction de freinage récupératif.

Dans l'un et l'autre modes, chacun des alténo-démarreurs est avantageusement couplé indépendamment au premier moteur thermique, de préférence par une courroie.

Ces quelques spécifications essentielles auront rendu évidents pour l'homme de métier les avantages apportés par l'invention par rapport à l'état de la technique antérieur tendant au développement d'alterno-démarreurs dédiés à de gros moteurs.

Les spécifications détaillées de l'invention sont données dans la description qui suit en liaison avec les dessins ci-annexés. Il est à noter que ces dessins n'ont d'autre but que d'illustrer le texte de la description et ne constituent en aucune sorte une limitation de la portée de l'invention.

### BREVE DESCRIPTION DES DESSINS.

La **Figure 1** est une représentation schématique d'un système micro-hybride à alterno-démarreur connu équipé d'une fonctionnalité d'arrêt/relance automatique pour un moteur thermique de petite cylindrée, le système étant connecté directement à une batterie de bord.

La **Figure 2** est une représentation schématique d'un système micro-hybride à alterno-démarreur connu équipé d'une fonctionnalité d'arrêt/relance automatique et de type à freinage récupératif pour un moteur thermique de petite cylindrée.

La **Figure 3a** est une représentation schématique en plan d'un système micro-hybride à plusieurs alterno-démarreurs selon l'invention pour un moteur thermique de grosse cylindrée, comprenant deux dispositifs à alterno-démarreur identiques.

La **Figure 3b** est une représentation schématique de face d'un système micro-hybride selon l'invention, montrant le couplage mécanique de deux alterno-démarreurs identiques.

### DESCRIPTION DES MODES DE REALISATION PREFERES DE L'INVENTION.

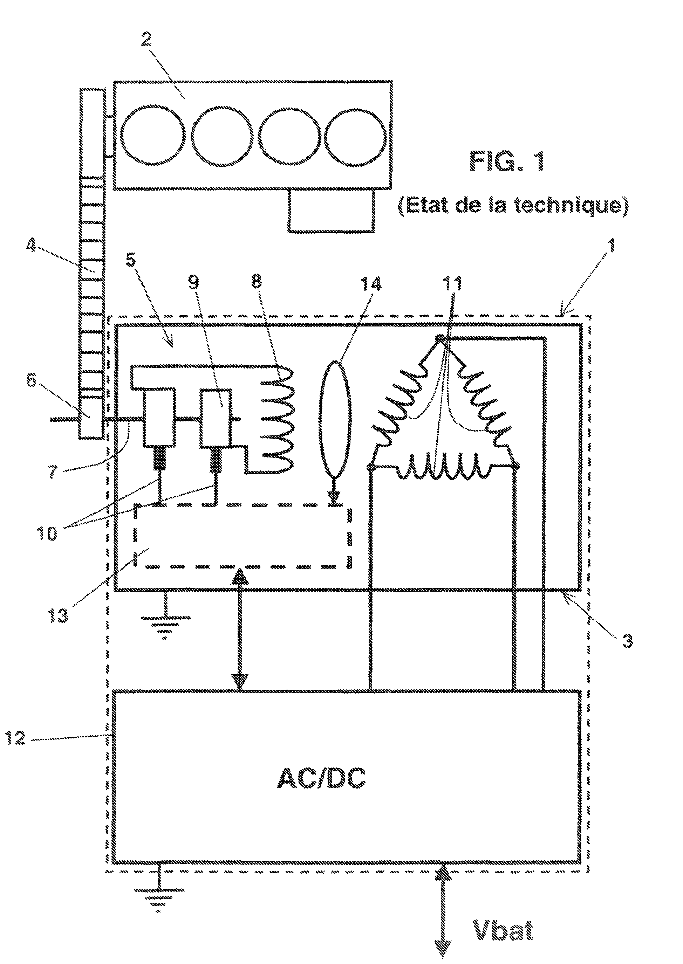

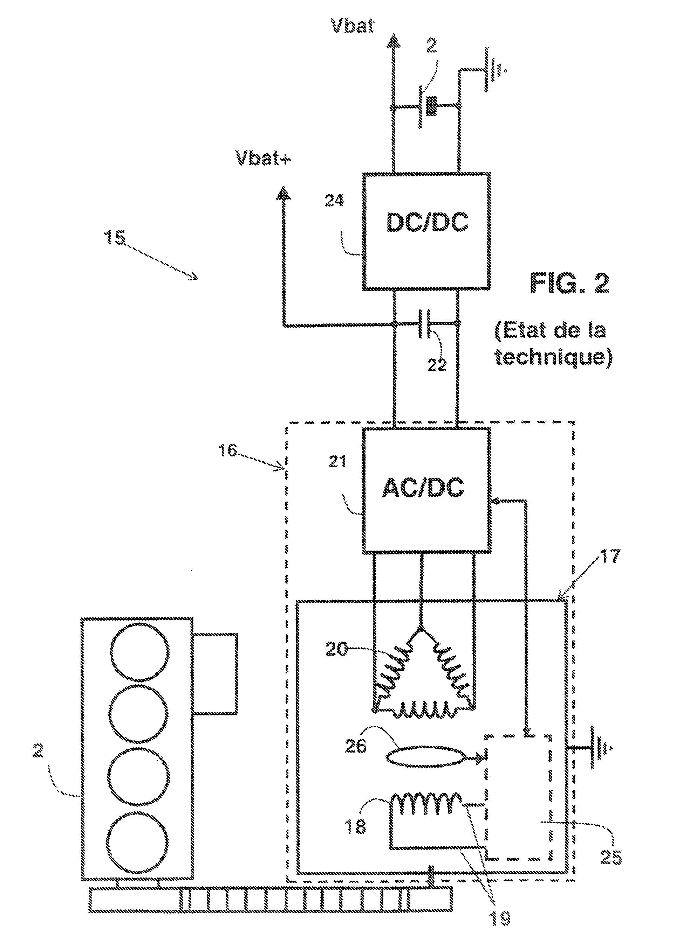

Les modes de réalisation préférés de l'invention concernent les véhicules équipés d'un système micro-hybride pouvant être équipé d'une fonctionnalité d'arrêt/ relance moteur et avec ou sans dispositif de récupération d'énergie au freinage, tels que représentés schématiquement sur les **Figures 1** **et** **2****,** respectivement, dans le cas de moteurs de petites cylindrées.

La **Figure 1** montre un système micro-hybride 1, connu en soi, couplé à un moteur thermique 2 de véhicule et connecté directement à une batterie de bord Vbat.

Ce système 1 comprend un alterno-démarreur 3 constitué d'une machine électrique réversible accouplée au moteur 2 au moyen d'une transmission 4 par courroie et poulies.

La machine électrique 3 comporte un rotor 5 solidaire d'une poulie de sortie 6 en bout d'arbre 7. Le rotor 5 présente un inducteur 8 alimenté au moyen d'un collecteur tournant 9 par un circuit d'excitation 10.

La machine 3 comprend également des enroulements de phases 11, ou induit, alimentés par un onduleur 12.

Un circuit de commande 13 pilote les circuits de puissance de la machine 3, constitués par l'onduleur 12 et le circuit d'excitation 10, en fonction des informations fournies par un capteur de la position 14 du rotor 5, et de signaux de contrôle générés par une unité de contrôle électronique du véhicule.

L'unité de contrôle électronique reçoit des paramètres de fonctionnement du moteur 2, et d'autres informations de contexte par des liaisons filaires dédiées ou par un bus de communication de données embarqué de type CAN (non représentés).

L'onduleur 12 est de préférence constitué par un circuit hacheur de la tension d'alimentation Vbat de bord générant des impulsions, dont la fréquence et la largeur sont contrôlées par le circuit de commande 13.

Le circuit hacheur 12 est un convertisseur alternatif - continu réversible qui fonctionne en redresseur synchrone quand l'alterno-démarreur 3 fonctionne en alternateur.

Un exemple connu de système micro-hybride équipé d'une fonctionnalité d'arrêt/relance tel que celui représenté schématiquement sur la **Figure 1****,** et adapté à un moteur diesel de 1,6 L, présente les caractéristiques suivantes :
- puissance : 2,5 Kw sous 14V
- couple initial sous 14V : 50 N.m

Une architecture micro-hybride à freinage récupératif, dite également de type « +X », qui est également concernée par l'invention, est représentée sur la **Figure 2** dans le cas de moteurs de petites cylindrées.

Le système micro-hybride 15 comprend, comme le système micro-hybride représenté sur **la** **Figure 1****,** un ensemble 16 constitué d'une machine électrique tournante 17 présentant un inducteur 18 alimenté par un circuit d'excitation 19, des enroulements de phases 20 alimentés par un convertiseur alternatif-continu réversible 21 fonctionnant en onduleur.

Mais, à la différence de l'onduleur 12 équipant l'alterno-démarreur classique 3, l'onduleur 21 est alimenté par une ultra-capacité 22 au lieu d'être connecté directement à la batterie de bord 23.

Dans le fonctionnement en génératrice, la machine électrique 17 charge l'ultra-capacité 22 au moyen du convertiseur alternatif-continu réversible 21 fonctionnant en redresseur et fournit au réseau électrique de bord une tension Vbat+X, comprise par exemple entre 18 et 24 V, supérieure à la tension de batterie Vbat.

Des circuits de conversion d'énergie 24 constitués par un convertisseur continu-continu, permettent des échanges d'énergie électrique entre la batterie 23 de bord et l'ultra-capacité 22.

Un circuit de commande 25 pilote le circuit d'excitation 19, et le convertiseur alternatif-continu réversible 21 en fonction des informations fournies par un capteur de la position 26 du rotor 18, et de signaux de contrôle générés par une unité de contrôle électronique du véhicule.

Le système micro-hybride 15 représenté sur la **Figure 2** permet, de manière connue en soi, de mettre en oeuvre une fonction de freinage récupératif : une partie de l'énergie mécanique du freinage transformée en énergie électrique par la machine électrique 17 fonctionnant en génératrice est stockée dans l'ultra-capacité 22 et est utilisée par exemple pour apporter un complément de couple au moteur thermique 2 en faisant fonctionner la machine électrique 17 en moteur électrique.

Un exemple connu d'un système micro-hybride équipé de fonctionnalités d'arrêt/relance moteur et de freinage récupératif tel que celui représenté schématiquement sur la **Figure 2****,** et adapté à un moteur diesel de 1,6 L, présente les caractéristiques suivantes :
- puissance : 4,4 Kw sous 24V
- couple initial sous 24V : 90 N.m

Dans le cas où l'on désire monter un système à alterno-démarreur sur un véhicule équipé d'un gros moteur thermique, par exemple d'un moteur diesel de 3,2 L de cylindrée, les systèmes décrits ci-dessus pour des moteurs de petites cylindrées ne conviennent pas, car le couple de démarrage du moteur nécessaire est généralement supérieur à 100 N.m.

La solution technique qui consiste à concevoir de nouveaux dispositifs dont les caractéristiques de couple et de puissance sont adaptées aux moteurs thermiques de cette catégorie n'est pas optimum, car elle conduit à de nouveaux coûts de R&D.

De plus, il n'est pas certain que les phénomènes de saturation magnétiques dans les matériaux connus permettent d'atteindre les couples de démarrage requis sous de petits facteurs de forme avec une machine unique.

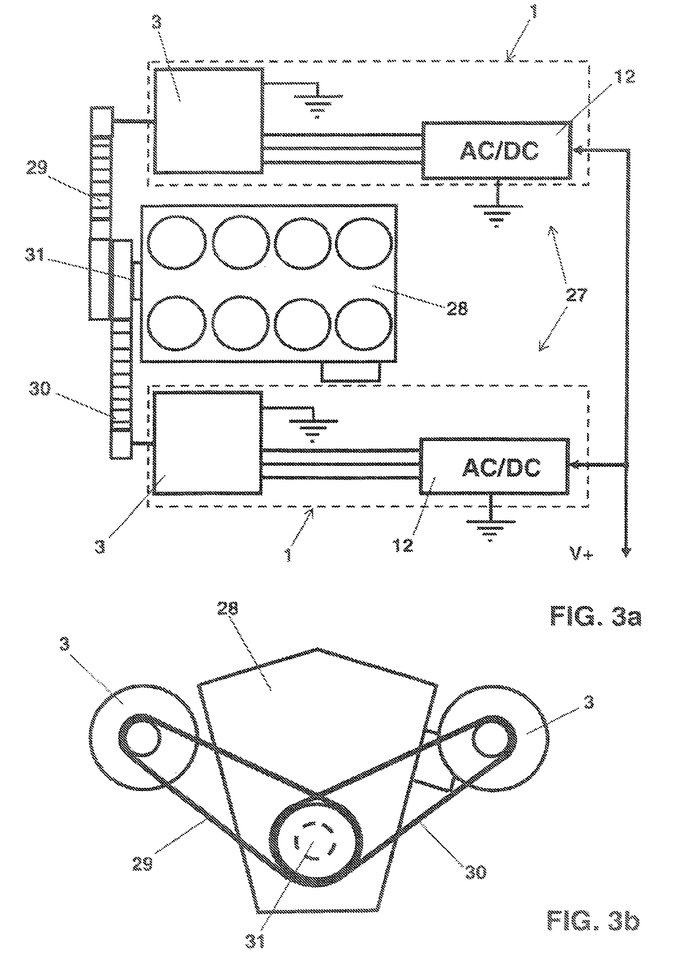

Comme le montrent bien les **Figures 3a et 3b**, il est donc proposé, selon l'invention, de constituer un système micro-hybride 27 pour un moteur thermique 28 de grosse cylindrée par le couplage mécanique de deux dispositifs à alterno-démarreur identiques 1 conçus pour un moteur thermique 2 de petite cylindrée.

Les deux alterno-démarreurs 3 équipant les dispositifs à alterno-démarreur 1 sont montés sur deux chemins de courroies 29, 30 séparés de manière à cumuler les couples appliqués sur le vilebrequin 31 du véhicule pour le redémarrage, et doubler le débit en mode alternateur.

Le système selon l'invention représenté sur la **Figure 3a** concerne aussi bien un premier mode de réalisation préféré où les dispositifs à alterno-démarreur identiques 1 sont connectés directement en parallèle à une batterie de bord, qu'un second mode de réalisation préféré de l'invention où les dispositifs à alterno-démarreur identiques 16 sont reliés en parallèle à un réseau électrique de bord à tension variable de type « 14+X ».

Les signaux de contrôle générés par une unité de contrôle électronique du véhicule sont appliqués simultanément sur les circuits de commande 13, 25 des alterno-démarreurs 3, 17 couplés mécaniquement.

De manière générale, le contrôle et le diagnostic simultanés des deux dispositifs à alterno-démarreur identiques 1, 16 est possible sans câblage complexe grâce aux interfaces avec des bus de communication embarqués par exemple de type CAN dont sont munis ces dispositifs à l'origine.

Dans le second mode de réalisation, le réseau électrique de bord comprend de préférence un stockeur d'énergie 22 constitué par un ou plusieurs condensateurs de très forte capacité (ou ultra-capacité) de technologie EDLC, mais, alternativement, le stockeur d'énergie est aussi bien une batterie de type Ni-MH.

Dans l'exemple d'un véhicule équipé d'un moteur diesel de 3,2 L de cylindrée, les deux exemples de systèmes à alterno-démarreur cités ci-dessus et adaptés à un moteur diesel de 1,6 L de cylindrée conviennent pour constituer un système micro-hybride 27 adéquat, car leur couplage mécanique procure le couple de démarrage minimun de 100 N.m nécessaire.

L'invention ne se limite pas au couplage de deux dispositifs à alterno-démarreur, et grâce à la solution proposée, il est possible de faire du « Stop and Go » sur des véhicules destinés aux transport en commun, équipés de moteurs diesel de très grosse cylindrée, par exemple de 6L.

Il est également possible de mettre en oeuvre économiquement une fonction de freinage récupératif sur ce type de véhicules, basée sur une EDLC ou une batterie Ni-MH.

De plus, l'invention procure un avantage concurrentiel important sur le marché des dispositifs à alterno-démarreur destinés aux voitures particulière, puisqu'elle permet de réaliser des économies d'échelle sur les coûts de fabrication de ces dispositifs en étendant leur marché au véhicules utilitaires, de transport en commun et de service.

Comme il va de soi, l'invention ne se limite pas aux seuls modes d'exécution préférentiels décrits ci-dessus.

L'invention embrasse au contraire toutes les variantes possibles de réalisation qui resteraient dans le cadre défini par les revendications ci-après.

## Revendications

1. Système à alterno-démarreur pour moteur thermique de véhicule de grosse cylindrée, ledit système étant connecté à un réseau électrique de bord (V+) dudit véhicule, **caractérisé en ce que** ledit système (27) comprend un nombre supérieur ou égal à deux de dispositifs à alterno-démarreur (1) identiques couplés mécaniquement et indépendamment audit moteur thermique (28), chacun desdits dispositifs à alterno-démarreur (1) comprenant un alterno-démarreur (3) et un convertisseur AC/DC réversible (12) relié à l'alterno-démarreur (3) et connecté audit réseau électrique de bord (V+).

2. Système selon la revendication 1, **caractérisé en ce que** ledit réseau électrique de bord (V+) est connecté directement à une batterie de bord.

3. Système selon la revendication 1, **caractérisé en ce que** ledit réseau électrique de bord (V+) comprend au moins une ultra-capacité.

4. Système selon la revendication 1, **caractérisé en ce que** ledit réseau électrique de bord (V+) comprend au moins un convertisseur DC/DC.

5. Système selon la revendication 1, **caractérisé en ce que** ledit réseau électrique de bord (V+) comprend une ultra-capacité, et une convertisseur DC/DC relié à ladite ultra-capacité et à une batterie de bord.

6. Système selon la revendication 5, **caractérisé en ce qu'**il comprend une fonction de freinage récupératif.

7. Système selon l'une quelconque des revendications 1 à 6 précédentes, **caractérisé en ce que** chacun desdits alterno-démarreurs (3,17) est couplé indépendamment audit moteur thermique (28) par une courroie (29,30).

## Patentansprüche

1. System mit Starter-Generator für einen Verbrennungsmotor eines Fahrzeugs mit großem Hubraum, wobei das System mit einem elektrischen Bordnetz (V+) des Fahrzeugs verbunden ist, **dadurch gekennzeichnet, dass** das System (27) eine Anzahl von mehr als oder gleich zwei von gleichen Vorrichtungen mit Starter-Generator (1) enthält, die mechanisch und unabhängig mit dem Verbrennungsmotor (28) verbunden sind, wobei jede der Vorrichtungen mit Starter-Generator (1) einen Starter-Generator (3) und einen umkehrbaren AC/DC-Wandler (12) enthält, der mit dem Starter-Generator (3) verbunden und an das elektrische Bordnetz (V+) angeschlossen ist.

2. System nach Anspruch 1, **dadurch gekennzeichnet, dass** das elektrische Bordnetz (V+) direkt an eine Bordbatterie angeschlossen ist.

3. System nach Anspruch 1, **dadurch gekennzeichnet, dass** das elektrische Bordnetz (V+) mindestens einen Ultrakondensator enthält.

4. System nach Anspruch 1, **dadurch gekennzeichnet, dass** das elektrische Bordnetz (V+) mindestens einen DC/DC-Wandler enthält.

5. System nach Anspruch 1, **dadurch gekennzeichnet, dass** das elektrische Bordnetz (V+) einen Ultrakondensator und einen mit dem Ultrakondensator und mit einer Bordbatterie verbundenen DC/DC-Wandler enthält.

6. System nach Anspruch 5, **dadurch gekennzeichnet, dass** es eine Nutzbremsfunktion enthält.

7. System nach einem der vorhergehenden Ansprüche 1 bis 6, **dadurch gekennzeichnet, dass** jeder der Starter-Generatoren (3, 17) unabhängig über einen Antriebsriemen (29, 30) mit dem Verbrennungsmotor (28) gekoppelt ist.

## Claims

1. Alternator-starter system for a vehicle heat engine of large cubic capacity, the said system being connected to an on-board electrical network (V+) of the said vehicle, **characterized in that** the said system (27) comprises a number greater than or equal to two identical alternator-starter devices (1) coupled mechanically and independently to the said heat engine (28), each of the said alternator-starter devices (1) comprising an alternator-starter (3) and a reversible AC/DC converter (12) connected to the alternator-starter (3) and connected to the said on-board electrical network (V+).

2. System according to Claim 1, **characterized in that** the said on-board electrical network (V+) is directly connected to an on-board battery.

3. System according to Claim 1, **characterized in that** the said on-board electrical network (V+) comprises at least one ultracapacitor.

4. System according to Claim 1, **characterized in that** the said on-board electrical network (V+) comprises at least one DC/DC converter.

5. System according to Claim 1, **characterized in that** the said on-board electrical network (V+) comprises an ultracapacitor, a DC/DC converter linked to the said ultracapacitor and an on-board battery.

6. System according to Claim 5, **characterized in that** it comprises a regenerative braking function.

7. System according to any one of Claims 1 to 6, **characterized in that** each of the said alternator-starters (3, 17) is independently coupled to the said heat engine (28) by a belt (29, 30).
